# EUROPÄISCHE PATENTSCHRIFT

(11) **EP 3 704 359 B1**
(45) Veröffentlichungstag und Bekanntmachung des Hinweises auf die Patenterteilung: **13.10.2021**
(21) Anmeldenummer: 18752137.2
(22) Anmeldetag: 06.08.2018
(51) Int. Cl.: F01L 3/14

(54) **INNENGEKÜHLTES VENTIL FÜR EINEN VERBRENNUNGSMOTOR**
INTERNALLY COOLED VALVE FOR AN INTERNAL COMBUSTION ENGINE
SOUPAPE À REFROIDISSEMENT INTÉRIEUR POUR MOTEUR À COMBUSTION INTERNE

(30) Priorität: 30.10.2017 DE 102017125365
(43) Veröffentlichungstag der Anmeldung: 09.09.2020
(73) Patentinhaber: Federal-Mogul Valvetrain GmbH, 30890 Barsinghausen (DE)
(72) Erfinder: MATTHIAS, Thorsten, 30161 Hannover (DE); WOLKING, Antonius, 30890 Barsinghausen (DE); ARIAS, Fernando, 30655 Hannover (DE); RINGELING, Florian, 30459 Hannover (DE)
(74) Vertreter: Kurig, Thomas
(86) Internationale Anmeldenummer: PCT/EP2018/071242
(87) Internationale Veröffentlichungsnummer: WO 2019/086154

(56) Entgegenhaltungen:
- WO-A1-03/074843
- CN-A- 101 713 306
- CN-U- 206 221 047
- DE-A1- 3 015 201
- DE-A1-102009 016 938
- JP-A- 2005 048 634

## Beschreibung

Die vorliegende Erfindung betrifft ein innengekühltes Ventil, mit verbesserten Kühleigenschaften. Die vorliegende Erfindung betrifft insbesondere ein innengekühltes Ventil mit einem Ventilkörper, der einen Ventilkopf und einen Ventilschaft umfasst, wobei in dem Ventilkörper mindestens ein Hohlraum vorliegt, in dem ein Kühlmittel aufgenommen bzw. angeordnet ist, das zumindest bei Betriebstemperatur ein Nanofluid ist. Durch die Eigenschaften der Partikel oder Teilchen in dem Nanofluid wird die Wärmeaufnahme bzw. Wärmeabgabe des Fluids gegenüber einer reinen Flüssigkeit verbessert, indem die Wärmeleitfähigkeit und/oder die Wärmekapazität der Teilchen in dem Nanofluid genutzt werden, um das Kühlmittel besser an gewünschte Betriebs- und Auslegungsparameter anpassen zu können.

Bisher sind viele verschiedene innengekühlte Ventile in den verschiedensten Ausführungen bekannt geworden, da diese Technologie bereits vor längerer Zeit zum Einsatz kam.

Vor allem bei Auslassventilen wird eine Innenkühlung eingesetzt, da Einlassventile bei jedem Ansaugtakt durch die zugeführte Frischluft bzw. das zugeführte Gemisch gekühlt werden, wohingegen Auslassventile sowohl von Seiten des Brennraums als auch durch die vorbeistreichenden Abgase thermisch belastet werden.

Der Hohlraum eines innengekühlten Auslassventils ist üblicherweise ca. zu 60% mit Natrium gefüllt. Durch die teilweise Füllung kann sich das, bei einer Betriebstemperatur des Motors flüssige, Natrium bei jedem Öffnen des Ventils vom Ventilkopf in Richtung des Ventilschafts und bei jedem Schließen des Ventils von dem Ventilschaft in Richtung des Ventilkopfes bewegen, und dabei Wärmeenergie transportieren. Am Ventilkopf und am unteren Teil des Ventilschafts nimmt das Ventil und das Kühlmittel Wärme auf, und an dem Ventilschaft, der in dem gekühlten Motorkopf geführt ist, gibt das Ventil und damit auch das Kühlmittel die Wärme wieder ab. Diese Art der Kühlung ist als "Shaker-Kühlung" bekannt. Auslassventile können Temperaturen bis zu 900°C erreichen. Durch eine effektive Kühlung ist es bereits möglich, eine Temperaturverringerung um ca. 150°C zu erreichen.

Bisher ist es ebenfalls bekannt geworden, den Hohlraum eines Ventils mit Blei zu füllen, wie es in der deutschen Patentanmeldung DE1970267A1 beschrieben ist.

Weiterhin ist es aus dem Dokument CN 101713306 bekannt, ein innengekühltes Ventil mit einer Natriumfüllung zu versehen in der Nanopartikel eingebracht sind. Das Dokument JP 2005048634 A beschreibt ein Ventil mit einem Kern aus einem Kohlenstoff-Verbundmaterial. Die internationale Patentanmeldung WO 03/074843 A1 offenbart ein Leichtbauventil mit einer Stützstruktur und einer Natriumfüllung. Die Patentanmeldung DE 3015201 A1 betrifft ein innengekühltes Ventil dessen Natriumfüllung zusätzlich mit Kupferteilchen versetzt ist. Aus der Patenanmeldung DE 10 2009 016938 A1 ist ein innengekühltes Ventil bekannt, das im Gegensatz zu bekannten natriumgekühlten Ventilen jedoch nicht mit Natrium, sondern mit Graphit, Kupfer, einer Kupferlegierung oder einem Sinterwerkstoff auf Kupferbasis gefüllt ist.

Es ist wünschenswert, die Kühlung eines Verbrennungsmotorventils insbesondere eines Auslassventils zu verbessern.

Diese Aufgabe wird gelöst mit einem innengekühlten Ventil mit den Merkmalen des Anspruchs 1, wobei bevorzugte Ausführungen in den abhängigen Ansprüchen beschrieben sind.

Gemäß einem Aspekt der vorliegenden Erfindung wird ein innengekühltes Ventil bereitgestellt mit einem Ventilkörper, der einen Ventilkopf und einen Ventilschaft umfasst, wobei der Ventilkörper mindestens einen Hohlraum umfasst, in dem ein Nanofluid als Kühlmittel angeordnet ist. Ein Nanofluid ist als eine Dispersion von kleinen Partikeln in der Größenordnung von Nanometern, die auch als Nanopartikel oder Nanoteilchen bezeichnet werden, in einer Flüssigkeit definiert. Es liegt eine Dispersion von/mit Nanopartikeln vor, aus Gründen der Knappheit wird jedoch im Folgenden der Begriff "Nanofluid" verwendet, auch wenn es sich hier nicht notwendigerweise um "Mikrofüssigkeiten" handelt, wie der Name andeutet.

In einer Ausführungsform der vorliegenden Erfindung liegt das Nanofluid erst bei einer Betriebstemperatur in einer nano-fluiden Form vor, und kann bei Zimmertemperatur von 20°C bzw. Normalbedingungen bei 0°C in einem festen Aggregatszustand vorliegen.

Bei einer weiteren beispielhaften Ausführung der vorliegenden Erfindung umfasst das Nanofluid Natrium, Lithium, Kalium, Cäsium oder eine Natrium-Kalium-Legierung als Dispersionsmedium. Mit Natrium liegen die meisten Erfahrungen bei der Herstellung von innengekühlten Ventilen vor. Je nach benötigten Eigenschaften kann jedoch auch Lithium, Kalium, Cäsium oder deren Legierungen als Dispersionsmedium verwendet werden. Es erscheint ebenfalls möglich Wood'sches Metall oder andere Metalle mit einem niedrigen Schmelzpunkt zu verwenden. Auch hier sollte ein Fluid verwendet werden, das eine hohe Wärmeleitfähigkeit und eine hohe Wärmekapazität aufweist.

Das Nanofluid umfasst mindestens zwei Arten Nanopartikel bzw. Nanopartikel als dispergierte Teilchen, aus der Gruppe ausgewählt aus Titanteilchen, Nano-Diamanten, Siliziumcarbid-Teilchen, Beryllium-Teilchen, Bornitrid-Teilchen und/oder Graphen-Teilchen. Die Silizium-Carbid-Teilchen und die Nano-Diamanten (d.h. Diamanten mit einer Korngröße von einigen Nanometern) eignen sich sehr gut, um eine Wärmekapazität des Nanofluids gegenüber einem herkömmlichen reinen Kühlmittel wie Natrium zu erhöhen. Die kleinen Partikel weisen dabei ein sehr vorteilhaftes Oberfläche/Masse-Verhältnis auf, was es ermöglicht, auch ein Material mit relativ schlechten Wärmeleiteigenschaften schnell zu erwärmen. Dabei wird die Wärme von dem Dispersionsmedium um das Teilchen herumgeleitet und kann das Nanopartikel über die gesamte Oberfläche erwärmen, was durch die geringen Abmessungen und das vorteilhafte Oberfläche/Masse-Verhältnis auch bei Materialien, die sehr schlechte Wärmeleiter sind, schnell möglich ist. Nanopartikel wie Titan hingegen sind sehr gute Wärmeleiter und können die Geschwindigkeit mit der Wärme vom Ventilteller auf das Nanofluid bzw. von dem Nanofluid auf den Ventilschaft übertragen wird deutlich erhöhen.

Bei der erfindungsgemäßen Ausführungsform des innengekühlten Ventils ist das Nanofluid als ein ternäres Nanofluid ausgeführt, das mindestens zwei verschiedene Arten von Nanopartikeln umfasst. Es können ebenfalls Nanopartikel, die gute Wärmeleiter sind und Nanopartikel die eine hohe Wärmekapazität aufweisen, in dem Nanofluid gemischt werden, um einerseits die Wärmeleitfähigkeit und andererseits die Wärmekapazität des Nanofluids zu erhöhen.

Eine weitere beispielhafte Ausführungsform des innengekühlten Ventils verwendet ein Nanofluid, das Partikel bzw. Nanopartikel mit einem Durchmesser im Bereich von 2 bis 100 nm, bevorzugt 4 bis 50 nm und weiter bevorzugt 6 bis 20 nm enthält. Die kleineren Durchmesser erhöhen zwar die Gefahr einer Aggregation und verhindern ein schnelles Dispergieren, sinken jedoch aufgrund der kleineren Reynoldszahlen viel langsamer ab als größere Partikel. Wenn die Partikel klein genug sind, sinken sie so langsam ab, dass der Motor und damit das Kühlmittel vor einem Absinken erstarrt, und das Problem mit einer Aggregation vollständig vermieden werden kann.

Bei einer anderen Ausführungsform des innengekühlten Ventils beträgt ein Anteil der Partikel im Nanofluid zwischen 0,5 und 30 Volumenprozent, bevorzugt zwischen 2 bis 20 und weiter bevorzugt zwischen 5 und 10 Volumenprozent. So kann sichergestellt werden, dass die Nanopartikel nur einen geringen Einfluss auf die Fließeigenschaften des Kühlmittels haben. Weiterhin kann durch diese Anteile von Nanopartikeln bereits eine merkliche Verbesserung der Kühleigenschaften bezüglich Wärmeleitung und/oder Wärmekapazität erreicht werden.

Das Nanofluid umfasst weiter ein Dispersionsmittel, das verhindert bzw. verhindern soll, dass sich die Nanopartikel zu Nanopartikel-Aggregaten zusammenfügen, und ein Redispergieren der Nanopartikel ermöglichen bzw. vereinfachen, nachdem diese sich abgesetzt haben. Als Dispergiermittel bzw. Dispersionshilfsmittel kann ein Sufractant bzw. Tensid eingesetzt werden.

Im Folgenden wir die vorliegende Erfindung anhand einer schematischen Darstellung eines erfindungsgemäßen innengekühlten Ventils veranschaulicht.

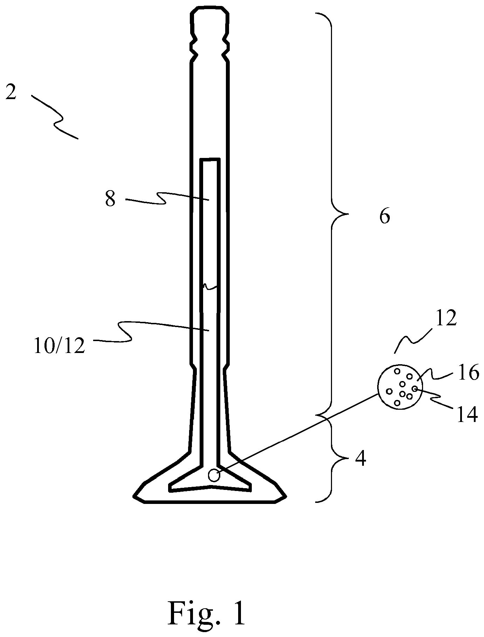

Figur 1 zeigt ein erfindungsgemäßes innengekühltes Ventil in einer Schnittansicht.

In der Figur 1 ist ein innengekühltes Ventil 2 in einer Schnittansicht dargestellt. Das Ventil umfasst einen Ventilkopf 4, der den Ventilteller umfasst, und einen Ventilschaft, mit dem das Ventil üblicherweise in einem Motorkopf geführt wird. Der Ventilteller schließt den Brennraum ab und bei einem Auslassventil umströmen die heißen Verbrennungsgase bei jedem Auslasstakt den gesamten Ventilkopf. Diese hohe thermische Belastung kann lediglich über den relativ dünnen und langen Ventilschaft 6 abgeführt werden.

In dem Ventil 2 erstreckt sich ein Hohlraum 8 von dem Ventilkopf 4 bis in den Ventilschaft 6. Dieser Hohlraum 8 ist zu einem Teil mit einem Kühlmittel 10 gefüllt. Bei jedem Öffnen des Ventils strömt das Kühlmittel 10 durch die Massenträgheit von dem Ventilkopf 4 in den Ventilschaft 6 und transportiert dabei durch seine Temperatur und Wärmekapazität auch eine gewisse Wärmeenergiemenge in den Ventilschaft, der durch den Zylinderkopf gekühlt wird. Bei jedem Schließen des Auslassventils 2 bei einem Beginn des Ansaugtakts fließt das abgekühlte Kühlmittel 10 wieder vom Ventilschaft zurück in den Ventilkopf und kann diesen kühlen, indem es dessen Wärmeenergie nutzt, um seine eigene Temperatur wieder zu erhöhen. Es sollte klar sein, dass dieses Prinzip umso besser funktioniert je höher die Wärmekapazität des Kühlmittels ist und je höher die Wärmeleitfähigkeit des Kühlmittels ist.

Erfindungsgemäß ist das Kühlmittel als ein Nanofluid ausgeführt, bei dem Partikel, die eine Abmessungen in der Größenordnung von Nanometern aufweisen, in einer Flüssigkeit dispergiert sind. Dies ist in der Ausschnittvergrößerung dargestellt. Das Nanofluid 12 umfasst Nanopartikel 14 die in einem Dispersionsmedium 16 dispergiert sind. Wenn die Nanopartikel 14 eine deutlich höhere Wärmeleitfähigkeit als das Dispersionsmedium 16 aufweist, erhöhen diese die Gesamtwärmeleitfähigkeit des Nanofluids gegenüber dem reinen Dispersionsmedium 16. Dies geschieht darüber, dass die Nanopartikel die Bereiche in denen sie sich befinden, quasi "thermisch kurzschließen". Wenn die Nanopartikel 14 eine deutlich höhere Wärmekapazität aufweisen als das Dispersionsmedium 16, erhöhen diese die Gesamtwärmekapazität des Nanofluids 12 gegenüber dem reinen Dispersionsmedium 16. Dabei wird die Wärmeleifähigkeit nicht besonders stark verringert, da die Partikel sehr klein sind und die Wärme quasi um diese Partikel herumfließen kann. Selbst wenn die Nanopartikel 14 bei einer hohen Wärmekapazität eine geringe Wärmeleitfähigkeit aufweisen, können sie doch schnell vollständig erwärmt werden, da sie in Bezug auf ihre Masse eine sehr große Oberfläche aufweisen, und die Nanopartikel daher sehr schnell mit dem Dispersionsmedium 16 ein thermisches Gleichgewicht erreichen. Das Dispersionsmedium erwärmt sich um das Nanopartikel herum, heizt dieses also von allen Seiten auf.

Es können auch ternäre Systeme verwendet werden, bei denen Nanopartikel mit einer erhöhten Leitfähigkeit und andere Nanopatikel mit einer erhöhten Wärmekapazität gemeinsam in einem Dispersionsmedium verwendet werden, wodurch beide Effekte sich ergänzend genutzt werden können.

Damit kann die Kühlung von Auslassventilen verbessert werden, was es ermöglicht höhere Betriebs- bzw. Verbrennungstemperaturen zu nutzen, was wiederum einem verbesserten Wirkungsgrad des Verbrennungsmotors zugutekommt. Durch den Shaker-Effekt wird sichergestellt dass die Nanopartikel in einem dispergierten Zustand verbleiben und sich nicht absetzen können. Durch die Verwendung eines Dispersionsmediums 16, das bei Nicht-Betriebsbedingungen einen festen Aggregatszustand aufweist kann die Dispersion quasi eingefroren werden, und die Nanopartikel können sich auch bei einem stehenden kalten Motor nicht absetzen. Das erstarrende Dispersionsmedium friert den dispergierten Zustand bis zu einer Wiederinbetriebnahme ein. Das Nanofluid kann sowohl bei Hohlraum-, bei Hohlschaft- als auch bei Hohlkopfventilen eingesetzt werden. Das Nanofluid kann bei Ventilen mit einem oder mehreren Hohlräumen Verwendung finden.

In dem dargestellten Hohlraumventil wird Natrium und Nanopartikel verwendet, wodurch der Kühlwirkung des Kühlmittels gegenüber reinem Natrium erhöht wird. Die Nanopartikel verringern ebenfalls die Reaktivität des Natriums, wodurch es leichter zu handhaben ist.

### Bezugszeichenliste:

- 2: Innengekühltes Ventil
- 4: Ventilkopf
- 6: Ventilschaft
- 8: Hohlraum
- 10: Kühlmittel
- 12: Nanofluid
- 14: Nanopartikel
- 16: Dispersionsmedium / Dispersionsmittel

## Patentansprüche

1. Innengekühltes Ventil (2), umfassend
einen Ventilkörper mit
einem Ventilkopf (4) und
einem Ventilschaft (6),
wobei der Ventilkörper mindestens einen Hohlraum (8) umfasst, in dem Kühlmittel (10) angeordnet ist,
wobei das Kühlmittel (10) ein Nanofluid (12) ist,
**dadurch gekennzeichnet, dass** das Nanofluid (12) ein ternäres Nanofluid ist, welches mindestens zwei der nachfolgend
genannten Arten von Nanopartikeln (14) umfasst, nämlich Titanteilchen, Nano-Diamanten, Siliziumcarbid-Teilchen, Beryllium-Teilchen, Bornitrid-Teilchen und/oder Graphen-Teilchen als dispergierte Teilchen, und
dass das Nanofluid (12) weiter ein Dispersionshilfsmittel umfasst, das verhindert, dass sich die Nanopartikel (14) zu Nanopartikel-Aggregaten zusammenfügen.

2. Innengekühltes Ventil (2) nach Anspruch 1, **dadurch gekennzeichnet, dass** das Nanofluid (12) erst bei einer Betriebstemperatur in einer fluiden Form vorliegt.

3. Innengekühltes Ventil (2) nach Anspruch 1 oder 2, **dadurch gekennzeichnet, dass** das Nanofluid (12) Natrium, Lithium, Kalium, Cäsium oder eine Natrium-Kalium-Legierung als Dispersionsmedium (16) umfasst.

4. Innengekühltes Ventil (2) nach einem der vorstehenden Ansprüche, **dadurch gekennzeichnet, dass** die Nanopartikel (14) des Nanofluids (12) einen Durchmesser im Bereich von 2 bis 100 nm, bevorzugt 4 bis 50 nm und weiter bevorzugt 6 bis 20 nm aufweisen.

5. Innengekühltes Ventil (2) nach einem der vorstehenden Ansprüche, **dadurch gekennzeichnet, dass** ein Anteil der Nanopartikel (14) im Nanofluid (12) zwischen 0,5 und 30 Volumenprozent, bevorzugt zwischen 2 bis 20 und weiter bevorzugt zwischen 5 und 10 Volumenprozent beträgt.

## Claims

1. An internally cooled valve (2), comprising
a valve body having
a valve head (4) and
a valve stem (6),
wherein the valve body comprises at least one cavity (8) in which coolant (10) is situated, wherein the coolant (10) is a nanofluid (12),
**characterized in that** the nanofluid (12) is a ternary nanofluid comprising at least two of the following types of nanoparticles (14), namely titanium particles, nano diamonds, silicon carbide particles, beryllium particles, boron nitride particles and / or graphene particles as dispersed particles, and
that the nanofluid (12) further comprises a dispersing additive that prevents the nanoparticles (14) from combining to nanoparticle aggregates.

2. The internally cooled valve (2) according to claim 1, **characterized in that** the nanofluid (12) is present in a fluid state only at an operating temperature.

3. The internally cooled valve (2) according to claim 1 or 2, **characterized in that** the nanofluid (12) comprises sodium, lithium, potassium, cesium or a sodium-potassium alloy as dispersion medium (16).

4. The internally cooled valve (2) according to one of the preceding claims, **characterized in that** the nanoparticles (14) of the nanofluid (12) have a diameter in the range from 2 to 100 nm, preferably 4 to 50 nm, and more preferably 6 to 20 nm.

5. The internally cooled valve (2) according to one of the preceding claims, **characterized in that** a portion of the nanoparticles (14) in the nanofluid (12) is between 0.5 and 30 % by volume, preferably between 2 and 20 and more preferably between 5 and 10 % by volume.

## Revendications

1. Vanne à refroidissement interne (2), comprenant
un corps de soupape avec une tête de soupape (4) et une tige de soupape (6),
dans laquelle le corps de soupape comprend au moins une cavité (8) dans laquelle le liquide de refroidissement (10) est agencé,
dans lequel le fluide caloporteur (10) est un nanofluide (12),
**caractérisé en ce que** le nanofluide (12) est un nanofluide ternaire qui comprend au moins deux des types de nanoparticules (14) mentionnés ci-après, à savoir des particules de titane, des nano-diamants, des particules de carbure de silicium, des particules de béryllium, des particules de nitrure de bore et/ou particules de graphène sous forme de particules dispersées, et
que le nanofluide (12) comprend en outre un auxiliaire de dispersion qui empêche les nanoparticules (14) de se réunir pour former des agrégats de nanoparticules.

2. Vanne à refroidissement interne (2) selon la revendication 1, **caractérisée en ce que** le nanofluide (12) n'est présent sous forme fluide qu'à une température de fonctionnement.

3. Vanne à refroidissement interne (2) selon la revendication 1 ou 2, **caractérisée en ce que** le nanofluide (12) comprend comme milieu de dispersion (16) du sodium, du lithium, du potassium, du césium ou un alliage sodium-potassium.

4. Vanne à refroidissement interne (2) selon une des revendications précédentes, **caractérisée en ce que** les nanoparticules (14) du nanofluide (12) présentent un diamètre compris entre 2 et 100 nm, de préférence 4 à 50 nm et plus préférentiellement 6 à 20 nm.

5. Vanne à refroidissement interne (2) selon une des revendications précédentes, **caractérisée en ce qu'**une proportion des nanoparticules (14) dans le nanofluide (12) est comprise entre 0,5 et 30% en volume, de préférence entre 2 à 20 et plus préférentiellement entre 5 et 10% en volume.
